# DEMANDE DE BREVET EUROPEEN

(11) **EP 0 920 157 A1**
(43) Date de publication de la demande: **02.06.1999**
(21) Numéro de dépôt: 98402951.2
(22) Date de dépôt: 26.11.1998
(51) Int. Cl.: H04L 12/56

(54) **Dispositif de gestion de mémoire tampon partagée**

(30) Priorité: 27.11.1997 FR 9714917
(71) Demandeur: ALCATEL, 75008 Paris (FR)
(72) Inventeur: Henrion, Michel, 1180 Bruxelles (BE)
(74) Mandataire: Sciaux, Edmond

(57) **Abrégé**

L'invention est relative a un dispositif de gestion de mémoire tampon partagée. Ce dispositif peut être employé notamment dans un élément de commutation de paquets ou de cellules comprenant n₁ entrées et n₂ sorties et des moyens à mémoire tampon partagée (18) stockant les blocs de données provenant des entrées. Ces blocs de données sont ensuite extraits pour être dirigés vers au moins une sortie (36ₗ). La mise en mémoire et l'extraction des blocs de données dans les moyens à mémoire tampon s'effectue selon des cycles périodiques, chaque cycle comportant des intervalles élémentaires au cours de chacun desquels un bloc de données reçu sur une entrée peut être mis en mémoire et un bloc de données préalablement mis en mémoire peut être extrait vers une sortie déterminée.

La mémoire tampon partagée comporte plusieurs sous-mémoires tampons partagées (30ₗ ... 30ₚ) commandées de façon telle, qu'au cours d'au moins certains des intervalles élémentaires, la mise en mémoire, ou écriture, d'un bloc de données d'entrée et l'extraction, ou lecture, d'un bloc de données vers une sortie s'effectuent simultanément dans des sous-mémoires tampons partagées distinctes. La sélection d'une sous-mémoire tampon partagée pour la lecture est prioritaire par rapport à la sélection d'une sous-mémoire tampon partagée pour la mise en mémoire.

Application à la transmission asynchrone de données.

## Description

L'invention est relative à un dispositif de gestion de mémoire tampon partagée, ce dispositif pouvant être employé dans un élément de commutation de paquets ou de cellules à mémoires tampons, ou dans un module terminal d'entrée ou de sortie d'un réseau de commutation asynchrone utilisant des mémoires tampons.

La transmission d'informations s'effectue de plus en plus à l'aide de signaux numériques transmis sous forme de données asynchrones se présentant sous forme de paquets ou de cellules qui sont transmis de leur point d'origine vers leur point d'arrivée en passant par des noeuds où convergent un certain nombre de lignes et d'où part une multiplicité de lignes. Un paquet ou une cellule doit être commuté d'une ligne d'entrée vers au moins une ligne de sortie. Cette commutation, qui s'effectue sous la commande d'un algorithme d'acheminement, est réalisée par des éléments de commutation dont chacun comprend une pluralité, n₁, d'entrées et une pluralité, n₂, de sorties.

Dans certains éléments de commutation classiques, une donnée d'entrée est stockée dans une mémoire tampon d'où elle est extraite ultérieurement pour être transmise vers la sortie choisie par l'algorithme d'acheminement.

Dans sa version la plus simple, un tel élément de commutation comporte une mémoire tampon individuelle pour chacune des n₂ sorties, chaque donnée d'entrée étant inscrite dans la mémoire tampon relative à la sortie choisie par l'algorithme d'acheminement. Cependant, pour limiter la complexité de ces éléments, il est connu d'utiliser une mémoire tampon unique dite "mémoire tampon partagée". Dans ce cas, l'élément de commutation comporte typiquement un multiplexeur d'entrée et un démultiplexeur de sortie, ainsi qu'un moyen de commande, notamment pour la gestion de la mémoire tampon.

Le fonctionnement d'un tel élément s'effectue par cycles. Chaque cycle correspond à l'écriture dans la mémoire tampon partagée de données reçues sur chacune des n₁ entrées, et à la lecture de la mémoire tampon partagée de données à transmettre sur chacune des n₂ sorties. Chaque cycle est classiquement divisé en un certain nombre d'intervalles temporels élémentaires au cours de chacun desquels est (sont) effectuée(s) une opération de lecture et/ou une opération d'écriture d'un bloc de données. Durant un intervalle temporel élémentaire donné comprenant les deux types d'opérations, un bloc de données reçu sur une entrée de rang déterminé est inscrit en mémoire, et un bloc de données à transmettre sur une sortie de rang donné est extrait de la mémoire, mais une opération de lecture et une opération d'écriture dans un même emplacement de la mémoire tampon doivent être effectuées séparément dans le temps.

La durée d'un cycle est conditionnée par trois paramètres, à savoir le débit binaire sur les entrées et sorties de l'élément de commutation, le nombre de bits d'un bloc de données traité en parallèle, et le nombre d'entrées et de sorties de l'élément de commutation. Alors qu'il est souhaitable d'augmenter la capacité (n₁ x n₂) de ce dernier, la durée d'un cycle diminue lorsque les entrées/sorties sont à haut débit, et on ne peut guère augmenter la taille d'un bloc de données traité en parallèle au-delà de certaines limites de complexité.

Dans des applications à large bande, la recherche d'augmentation du nombre d'entrées et de sorties diminue la durée des intervalles temporels élémentaires et donc le temps alloué à chaque opération d'écriture ou de lecture de la mémoire tampon partagée. Cette diminution peut non seulement entraîner des surcoûts prohibitifs, mais aussi se heurter aux limites des performances technologiques en temps d'accès de mémoire.

La demande de brevet européen n° **EP 0 700 187 (Mitsubishi)** décrit un dispositif de gestion d'une mémoire tampon partagée qui comporte plusieurs sous-mémoires tampons. Ces sous-mémoires tampons partagées sont commandées de façon telle qu'au cours d'au moins certains des intervalles temporels élémentaires, la mise en mémoire d'un bloc de données d'entrée et l'extraction d'un bloc de données vers une sortie puissent s'effectuer simultanément dans des sous-mémoires tampons partagées distinctes, la sélection de la sous-mémoire tampon partagée pour la lecture étant prioritaire sur la sélection de la sous-mémoire tampon partagée pour l'écriture.

De cette manière, pour chaque opération de lecture, comme pour chaque opération d'écriture, on dispose de la totalité de l'intervalle temporel élémentaire pour l'accès à la mémoire, alors qu'avec un élément de commutation connu précédemment la durée d'un intervalle temporel élémentaire doit être partagée pour effectuer les deux types d'opérations consécutivement dans le temps. L'ensemble des sous-mémoires tampons partagées, qui sont toutes de même capacité et identiques, constitue une mémoire tampon partagée virtuelle équivalente à une mémoire tampon partagée unique d'un élément de commutation connu.

Ce dispositif de gestion connu comporte une unité de commande de mémoire tampon partagée, pour commander un commutateur d'entrée et sélectionner la sous-mémoire tampon partagée dans laquelle une cellule reçue est inscrite. Cette unité est arrangée pour lire une pluralité de cellules, dans une pluralité de sous-mémoires tampons partagées, durant un cycle temporel correspondant à celui d'une cellule, et pour commander également un commutateur de sortie pour transmettre chaque cellule lue vers une sortie sélectionnée. Ce dispositif de gestion met à jour un tableau d'organisation des accès aux sous-mémoires tampons, ayant une première dimension selon le nombre de sous-mémoires tampons, et une seconde dimensions selon le nombre d'intervalles temporels élémentaires dans un cycle temporel correspondant à celui d'une cellule.

L'arbitrage entre les accès d'écriture et les accès de lecture des sous-mémoires tampons est géré en parallèle pour l'ensemble de tous les intervalles temporels d'accès (n1 accès d'écriture et n2 accès de lecture pour un élément de commutation à n1 entrées et n2 sorties) dans un cycle temporel correspondant à celui d'une cellule.

Ce dispositif de gestion est complexe, et le but de la présente invention est de proposer un dispositif de gestion qui soit plus simple.

Selon l'invention, un dispositif de gestion d'une mémoire tampon partagée comportant plusieurs sous-mémoires tampons partagées, un circuit de sélection en écriture pour y écrire les blocs de données provenant des entrées, un circuit de sélection en lecture pour y lire ensuite ces blocs de données et les diriger vers au moins une sortie ; ces deux circuit de sélection comportant des moyens d'arbitrage pour effectuer l'écriture et la lecture des blocs de données :
- selon des cycles périodiques, chaque cycle comportant des intervalles temporels élémentaires au cours de chacun desquels un bloc de données reçu sur une entrée peut être écrit dans une de ces sous-mémoires tampons partagées, et au cours desquels un bloc de données préalablement écrit peut être lu et envoyé vers une sortie déterminée ;
- en réalisant simultanément, au moins pendant certains desdits intervalles temporels élémentaires, l'écriture d'un bloc de données, provenant d'une entrée, et la lecture d'un bloc de données à envoyer vers une sortie, dans des sous-mémoires tampons partagées distinctes ; la sélection d'une sous-mémoire tampon pour la lecture étant prioritaire par rapport à la sélection de cette même sous-mémoire tampon pour l'écriture ;
**caractérisé** en ce que ces moyens d'arbitrage comportent des moyens pour arbitrer un seul accès en écriture vis à vis d'un seul accès en lecture, au cours de chaque intervalle temporel élémentaire.

Le dispositif de gestion ainsi caractérisé est plus simple à réaliser parce que l'arbitrage entre les accès d'écriture et les accès de lecture des sous-mémoires tampons est géré en série, c'est-à-dire successivement pour chacun des intervalles temporels élémentaires d'accès individuels à une sous-mémoire tampon, dans un cycle temporel correspondant à celui d'une cellule. Il réalise une seule opération logique au cours de chaque intervalle temporel élémentaire, pour l'arbitrage élémentaire d'un seul accès d'écriture par rapport à un seul accès de lecture.

Pour la gestion d'un tel dispositif il faut tenir compte du fait que le choix de la sous-mémoire tampon partagée dans laquelle s'effectue l'écriture est limité non seulement par la disponibilité des emplacements libres dans les diverses sous-mémoires tampons partagées, mais aussi par l'indisponibilité d'accès à la sous-mémoire tampon partagée sélectionnée en priorité pour la lecture. Il faut donc connaître le numéro de la sous-mémoire tampon partagée dans laquelle est stocké le bloc de données à lire pour pouvoir sélectionner une autre sous-mémoire tampon partagée dans laquelle on peut stocker un bloc de données entrantes ; cette sélection s'effectue par exemple en fonction de la disponibilité en emplacements libres de ces sous-mémoires tampons.

La gestion doit aussi tenir compte des risques de blocage à l'écriture. En effet, par rapport à un élément de commutation à mémoire tampon partagée unique, un élément de commutation selon l'invention présente un risque de blocage supplémentaire qui peut apparaître lorsque seule la sous-mémoire tampon partagée utilisée pour la lecture dispose d'emplacements libres alors que les autres sous-mémoires tampons partagées, accessibles pour l'écriture, sont entièrement pleines. Un tel risque de blocage est dit supplémentaire, car il n'existe pas dans le cas classique d'une mémoire tampon partagée unique (dans laquelle il est toujours possible d'écrire dans le dernier emplacement libre, quel qu'il soit).

Cette possibilité de blocage supplémentaire diminue avec l'augmentation du nombre de sous-mémoires tampons partagées. Mais comme l'augmentation du nombre de telles mémoires augmente la complexité de la commande, on préfère en pratique limiter ce nombre à une valeur relativement faible.

Selon un mode de réalisation préférentiel, les circuits de sélection sont tels qu'à chaque intervalle temporel élémentaire le choix de la sous-mémoire tampon partagée dans laquelle est mis en mémoire le bloc de données d'entrée dépend de l'état et/ou du taux de remplissage de chacune des sous-mémoires tampons partagées.

Pour réduire le risque de blocage supplémentaire, il est préférable que l'écriture se fasse dans la sous-mémoire tampon partagée la moins chargée.

Toutefois, ce type de commande n'élimine pas complètement le risque de blocage supplémentaire. Pour l'éliminer complètement, il faut choisir une capacité suffisante pour les sous-mémoires tampons partagées. A cet effet, on peut montrer que la probabilité de congestion de la sous-mémoire tampon partagée virtuelle équivalente sera inférieure ou égale à la probabilité de congestion d'un élément à mémoire tampon partagée unique de capacité S si la capacité S' de chaque sous-mémoire tampon partagée est telle que S' ≥ S/(p - 1), p étant le nombre de sous-mémoires tampons partagées.

Une autre caractéristique de l'invention est que le temps d'accès alloué aux opérations de mise à jour des listes chaînées dans les mémoires de gestion des emplacements libres et/ou des emplacements occupés est, par rapport à un élément de commutation à mémoire tampon partagée unique, augmenté de la même manière qu'est augmenté le temps d'accès alloué aux opérations d'écriture et de lecture des blocs de données.

D'autres caractéristiques et avantages de l'invention apparaîtront avec la description de certains de ses modes de réalisation, celle-ci étant effectuée en se référant aux dessins ci-annexés sur lesquels :
la figure 1 est un schéma de principe d'un élément de commutation selon l'invention,
la figure 1a est un schéma de paquet ou cellule,
la figure 1b est un diagramme illustrant le fonctionnement de l'élément représenté sur la figure 1,
la figure 2 est un schéma de circuit de gestion des emplacements libres des sous-mémoires tampons partagées de l'élément de la figure 1,
la figure 3 correspond à une variante de la figure 2,
la figure 4 représente un circuit de gestion des emplacements occupés pour les sous-mémoires tampons partagées de l'élément de la figure 1,
la figure 5 correspond à une variante de la figure 4,
la figure 6 est un schéma de circuit de gestion combinée des emplacements libres et des emplacements occupés pour les sous-mémoires tampons partagées de l'élément de la figure 1,
la figure 7 est un schéma de circuit de sélection de sous-mémoire tampon partagée pour écriture pour l'élément de la figure 1, et
la figure 8 est une vue partielle de l'élément de la figure 1 pour une variante des circuits de gestion.

Le principe de la transmission de données asynchrones par paquets ou cellules est classique ; il n'est donc pas utile de la décrire ici. Un élément de commutation est utilisable pour tout type de transfert asynchrone par paquets ou cellules, de longueur fixe ou variable.

L'élément de commutation 10 représenté sur les figures comprend n₁ entrées, 12₁, 12₂ ... 12ₙ₁ et n₂ sorties. Dans ce qui suit, pour simplifier, on prendra comme exemple n₁ = n₂ = 32.

Les données appliquées sur chaque entrée 12ᵢ sont de type numérique et se présentent sous forme de paquets ou de cellules 44 (figure la) découpés en blocs de données 46₁, 46₂ etc. de longueur fixe. Chaque bloc de données comporte c bits (par exemple, c = 64 bits).

Chaque entrée 12ᵢ est reliée à l'entrée d'un registre d'entrée série/parallèle 14ᵢ présentant une entrée série et une sortie parallèle d'un bloc de donnés de c bits. Les bits de même poids, c'est-à-dire de même rang, de chaque sortie parallèle des registres 14ᵢ sont connectés à l'entrée de rang i d'un multiplexeur 16₁ à 16_{c} à n₁ entrées. Ainsi, comme représenté, le bit le moins significatif, de rang 1 à droite de chaque registre 14ᵢ est connecté à l'entrée de rang i du multiplexeur 16₁. De même, le bit le plus significatif, de rang c, de la sortie du registre 14ᵢ est connecté à l'entrée de rang i du multiplexeur 16_{c}.

Les sorties des multiplexeurs 16₁ à 16_{c} constituent une sortie parallèle 17 à c bits. A chaque instant le signal sur cette sortie parallèle correspond à la sortie parallèle d'un registre 14ᵢ et donc à une entrée 12ᵢ.

Cette sortie parallèle est appliquée à une entrée parallèle correspondante de la mémoire tampon partagée virtuelle 18 conforme à l'invention.

La sortie de la mémoire tampon partagée virtuelle 18 est également sous forme parallèle à c bits. Chaque bit est appliqué à l'entrée d'un démultiplexeur 20₁ à 20_{c}. Chaque démultiplexeur 20_{K} comporte n₂ sorties. Ces démultiplexeurs sont associés à des registres de sorties parallèle/série 22₁ à 22n₂. Chaque démultiplexeur correspond à un bit de poids déterminé associé à une entrée correspondante d'un registre 22ᵢ. Ainsi, comme représenté, le démultiplexeur 20₁ est affecté au bit le moins significatif et la première sortie de ce démultiplexeur 20₁ est reliée à la première entrée, de rang 1, du registre 22₁ et la dernière sortie (de rang n₂) du registre 20₁ est reliée à l'entrée de rang 1 du registre 22_{n₂}.

De même, les n₂ sorties du démultiplexeur 20_{c} sont connectées à toutes les entrées de rang c (bit le plus significatif) des registres, respectivement 22₁ à 22_{n₂}.

Les sorties des registres 22₁ à 22_{n₂} constituent les sorties séries 24₁ à 24_{n₂} de l'élément de commutation 10.

Selon l'invention, la mémoire tampon partagée virtuelle 18 comporte p sous-mémoires tampons partagées 30₁, 30₂... 30ₚ. Ces sous-mémoires tampons partagées 30ⱼ sont, par exemple, toutes identiques et ont toutes une même capacité de Kₛ mots de c bits chacun.

Chaque sous-mémoire tampon partagée 30j présente une entrée parallèle 32ᵢ à c bits, comme la sortie parallèle 17. Toutes les entrées parallèles 32₁ à 32ₚ des sous-mémoires tampons partagées reçoivent le signal parallèle de la sortie 17 provenant des multiplexeurs 16₁ à 16_{c}. En d'autres termes, les mêmes c bits parallèles provenant des multiplexeurs 16_{K} sont répliqués sur chacune des entrées 32ⱼ des sous-mémoires tampons partagées. Ces entrées constituent des entrées d'écriture. A des instants donnés, un circuit 34 de sélection pour écriture, commande l'écriture dans l'une des sous-mémoires tampons partagées 30ᵢ, d'un mot de c bits provenant de la sortie 17.

Chaque sortie 36ᵢ d'une sous-mémoire tampon partagée 30ᵢ est également du type parallèle à c bits.

Les sorties 36ᵢ sont connectées aux entrées correspondantes 38ᵢ de c portes OU 40 en parallèle ; pour simplifier, une seule porte OU 40 a été représentée. Les sorties 41 des c portes OU 40 sont également parallèles à c bits et sont reliées aux entrées parallèles 43 formées par les entrées des démultiplexeurs 20₁ à 20_{c}.

A un instant donné, un circuit 42, de sélection de sous-mémoire tampon partagée pour lecture, donne l'autorisation à l'une des sous-mémoires tampons partagées de transmettre son bloc de données de c bits vers les c portes OU 40.

Dans ce qui précède, on a mentionné des opérations d'écriture et de lecture. Par "écriture", on entend ici la mise en mémoire d'un bloc de données dans un emplacement libre d'une sous-mémoire tampon partagée et, par "lecture", on entend l'extraction d'un bloc de données d'un emplacement d'une sous-mémoire tampon partagée.

Comme indiqué ci-dessus, pour simplifier l'explication, le fonctionnement de l'élément 10 est décrit dans le cas où n₁ = n₂ = 32. Le nombre d'intervalles temporels élémentaires étant égal au nombre d'entrées (et de sorties) de l'élément de commutation 10, le fonctionnement s'effectue par cycles de 32 intervalles temporels élémentaires, chacun de durée t (par exemple, t = 10 nanosecondes), c'est-à-dire que la durée d'un cycle est T = 32 x t (par exemple 320 nanosecondes).

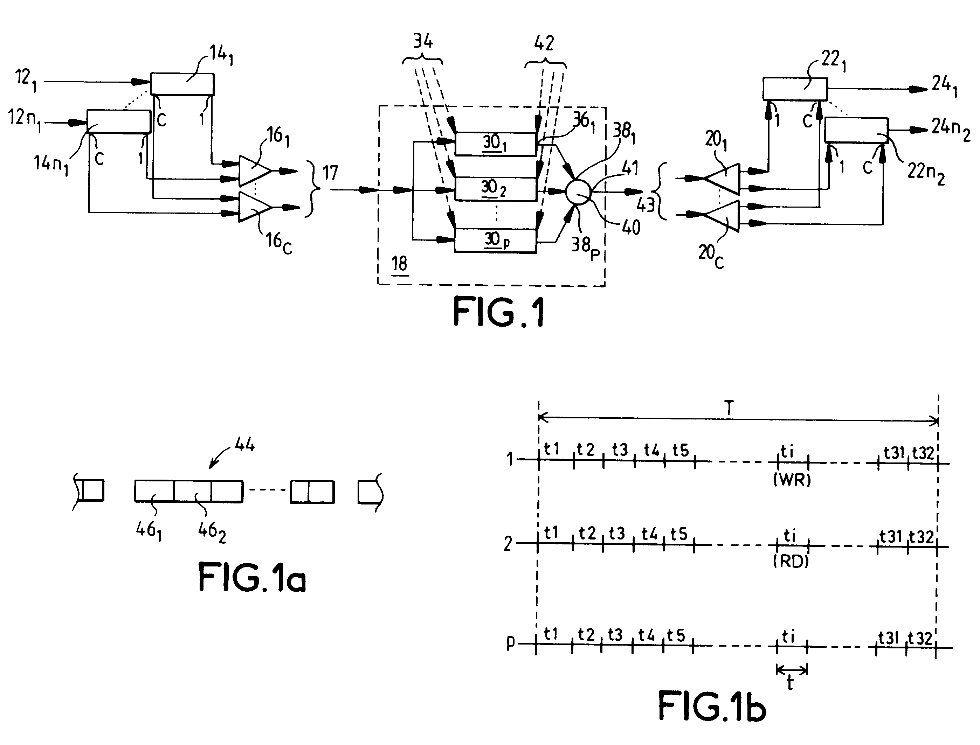

Au cours de chaque intervalle temporel élémentaire (figure 1b) de rang i, le bloc de données provenant de l'entrée 12ᵢ de même rang est mis en mémoire et le bloc de données à lire est transféré vers la sortie 24ᵢ de rang i.

Selon un aspect de l'invention, au cours d'un intervalle temporel élémentaire tᵢ (figure 1b), on peut simultanément lire, dans une première sous-mémoire tampon partagée, le bloc de données devant être transmis sur la sortie i et écrire dans une autre sous-mémoire tampon partagée, distincte de la première, un bloc de données provenant de l'entrée i.

Par exemple, au cours de l'intervalle i, on écrit dans la sous-mémoire tampon partagée 30₁ et on lit dans la sous-mémoire tampon partagée 30₂.

La commande des sous-mémoires tampons partagées est telle que la sélection de sous-mémoire tampon partagée pour lecture est prioritaire. En conséquence, le choix de la sous-mémoire tampon partagée dans laquelle, à l'instant tᵢ, on va inscrire le bloc de données provenant de l'entrée de rang i est restreint par l'interdiction d'écrire dans la sous-mémoire tampon partagée sélectionnées pour la lecture, ici la mémoire 30₂.

On appréciera que, contrairement aux éléments de commutation connus, le temps alloué à la lecture est égal à la totalité de l'intervalle temporel élémentaire. De même, l'écriture peut occuper entièrement la durée de l'intervalle temporel élémentaire. Cette propriété de lecture et d'écriture simultanées dans la mémoire tampon partagée virtuelle équivalente résulte du fait qu'on prévoit au moins deux sous-mémoires tampons partagées parallèles.

Ainsi, pour une durée de cycle donnée, on maximise le temps alloué aux opérations d'écriture ou de lecture, contrairement aux éléments de commutation antérieurement connus dans lesquels chaque intervalle temporel élémentaire doit être partagé pour effectuer séparément dans le temps chacune de ces opérations.

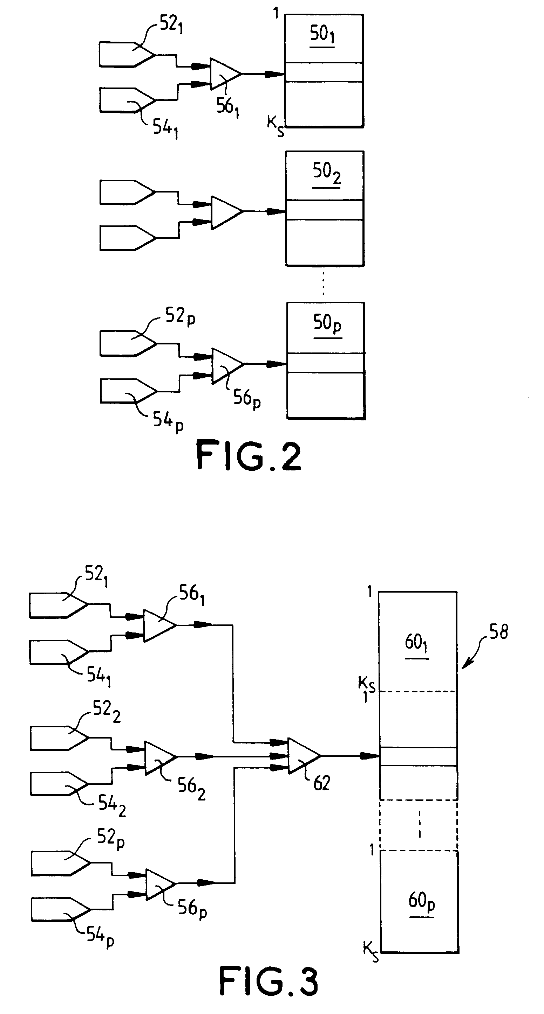

Une mémoire tampon partagée virtuelle 18 formée de p sous-mémoires tampons partagées 30₁ à 30ₚ nécessite des moyens de gestion des emplacements de mémoire sensiblement différents de ceux rencontrés avec une mémoire tampon partagée unique (classique). C'est pourquoi, on va décrire en relation avec les figures 2 à 6 divers modes de réalisation de circuits de gestion des emplacements libres et des emplacements occupés dans les sous-mémoires tampons partagées.

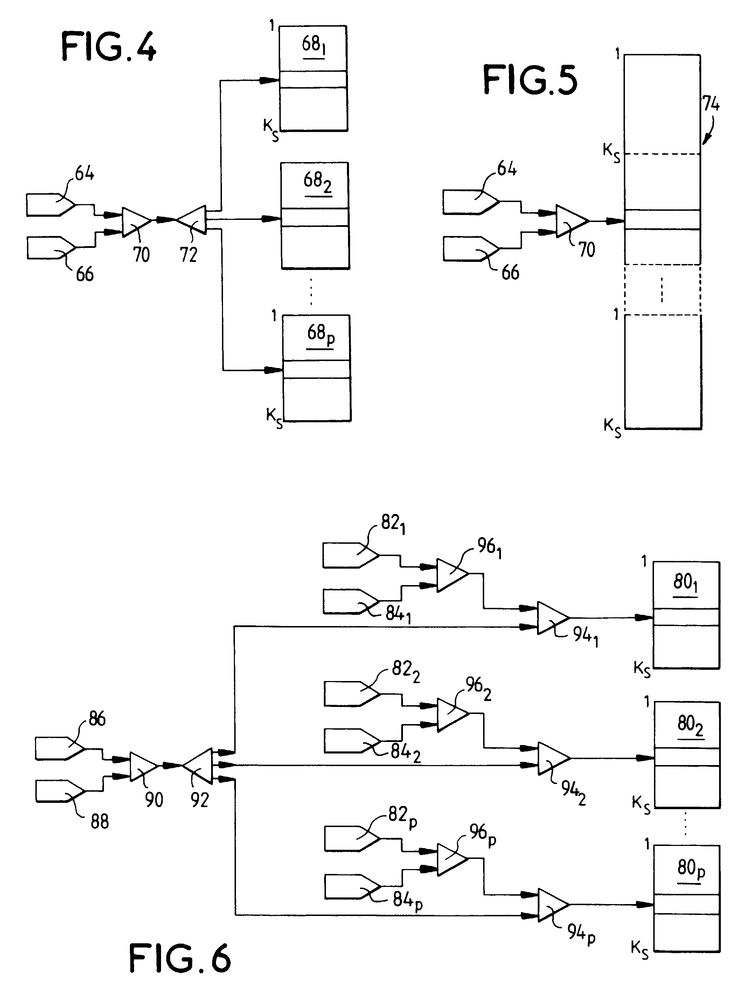

La gestion des emplacements libres (figures 2 et 3) permet de fournir l'adresse d'un emplacement libre dans une sous-mémoire tampon partagée pour chaque bloc de données reçu à écrire. La gestion des emplacements occupés (figures 4 et 5) permet de préserver l'ordre des blocs de données à adresser successivement à chaque lecture d'un bloc de données à transmettre.

Le circuit de gestion des emplacements libres qui est représenté sur la figure 2 comporte p mémoires de chaînage 50₁ ... 50ₚ d'emplacements libres, une par sous-mémoire tampon partagée.

Chaque mémoire de chaînage 50₁ ... 50ₚ comprend Kₛ mots ou lignes (Kₛ est le nombre de mots de c bits que peut contenir une sous-mémoire tampon 30ᵢ) de B₂ bits chacun, avec B₂ = log₂ Kₛ (logarithme de Kₛ en base 2). Par exemple si Kₛ = 8, alors B₂ = 3.

De façon classique, à chaque mémoire 50₁ ... 50ₚ est associé un couple de pointeurs, à savoir un pointeur de début de liste chaînée 52₁ ... 52ₚ et un pointeur de fin de liste chaînée 54₁ ... 54ₚ. Le pointeur 52_{K} de début de liste chaînée est constitué, par exemple, par un registre contenant l'adresse, ou l'identité, du premier emplacement libre dans la sous-mémoire tampon partagée 30_{K} correspondante et le pointeur 54_{K} de fin de liste chaînée est aussi un registre contenant l'adresse, ou l'identité, du dernier emplacement libre dans la sous-mémoire tampon partagée 30_{K}.

Sur le schéma de la figure 2, la sortie de chaque pointeur 52_{K}, 54_{K}, est connectée à l'entrée respective d'un multiplexeur 56_{K}. Mais il s'agit d'une représentation simplifiée. On rappelle ici les deux opérations principales que l'on peut effectuer avec une mémoire de chaînage (contenant une liste chaînée d'objets) et un couple de pointeurs. La première opération est la sélection d'un premier objet en tête de liste. A cet effet, le pointeur de tête de liste chaînée 52_{K} indique, d'une part, l'identité de ce premier objet, et fournit, d'autre part, l'adresse où est mémorisé l'objet suivant dans la liste chaînée de la mémoire 50_{K}. L'identité de cet objet suivant est sortie de la mémoire 50_{K} et est introduite dans le registre 52_{K}. La seconde opération de base consiste à ajouter un nouvel objet à la fin de la liste. Dans ce cas, l'identité de ce nouvel objet est inscrite en mémoire à l'adresse désignée par le pointeur de fin de liste chaînée. Ce dernier est mis à jour avec l'identité de ce nouvel objet.

Ainsi, le pointeur de début de liste d'emplacements libres correspondant à la sous-mémoire tampon partagée sélectionnée pour la lecture indique l'emplacement libre offert pour l'écriture dans cette mémoire et une opération de mise à jour est effectuée dans la mémoire de liste chaînée correspondante.

Dans la variante représentée sur la figure 3, on prévoit une seule mémoire 58 de chaînage des emplacements libres pour toutes les sous-mémoires tampons partagées 30₁ à 30ₚ. Cette mémoire 58 comporte p x Kₛ mots de B₂ bits chacun, avec B₂ = log₂ Kₛ.

La mémoire 58 comporte des emplacements de mémoires 60₁ à 60ₚ dont chacun a sensiblement le même rôle que la mémoire 50₁ à 50p du mode de réalisation décrit en relation avec la figure 2.

Comme dans le cas précédent, on prévoit p couples de pointeurs 52_{K}, 54_{K} et à chaque couple est associé un multiplexeur 56_{K}. Toutefois, à la différence du mode de réalisation décrit précédemment, un autre multiplexeur 62 reçoit les sorties des divers multiplexeurs 56_{K} de façon qu'à chaque instant une seule entrée soit adressée dans la mémoire 58.

On va maintenant décrire en relation avec les figures 4 et 5 un mode de réalisation de circuit de gestion des emplacements occupés dans les sous-mémoires tampons partagées 30.

Etant donné que, pour la lecture, il faut respecter un ordre bien déterminé de sortie des blocs de données, les emplacements occupés sont gérés à l'aide d'un seul couple de pointeurs (pour chacune des n₂ sorties de l'élément de commutation), à savoir un pointeur 64 de début de liste et un pointeur 66 de fin de liste (figures 4 et 5). En effet, les blocs de données délivrés sur chacune des n₂ sorties de l'élément de commutation 10 proviennent, en général, de sous-mémoires tampons partagées différentes, mais leur gestion ne doit pas être affectée par la répartition dynamique de leurs blocs de données successifs dans les diverses sous-mémoires tampons partagées.

Dans l'exemple représenté sur la figure 4, on prévoit des mémoires de chaînage 68₁ à 68ₚ. Chaque mémoire de chaînage a une capacité de Kₛ mots de B₃ bits chacun, avec B₃ = log₂(p x Kₛ). Dans cet exemple, les sorties des pointeurs 64 et 66 sont reliées aux entrées d'un multiplexeur à deux entrées 70 dont la sortie est connectée à l'entrée d'un démultiplexeur 72 à p sorties connectées à des entrées respectives des mémoires de chaînage 68₁ à 68ₚ.

Il est à noter que le nombre de bits B₃ de chaque mot dans les mémoires 68_{K} est dicté par le fait que, pour la lecture, il faut considérer l'ensemble des emplacements de mémoire possibles dans la mémoire tampon partagée virtuelle, c'est-à-dire dans toutes les sous-mémoires tampons partagées, soit p x Kₛ emplacements.

Dans la variante représentée sur la figure 5, au lieu de prévoir p mémoires de chaînage on prévoit une seule mémoire 74 avec une capacité de p x Kₛ mots de B₃ bits chacun. Comme dans le cas précédent B₃ = log₂(p x Kₛ).

Dans cette réalisation, il n'est pas nécessaire de prévoir un démultiplexeur comme le démultiplexeur 72 de la figure 5.

On va maintenant décrire en relation avec la figure 6, un circuit de gestion regroupée des emplacements libres et des emplacements occupés.

Comme expliqué ci-dessus dans le cadre d'une gestion séparée des emplacements libres et des emplacements occupés, une gestion regroupée doit être telle qu'elle comporte, d'une part, une liste chaînée d'emplacements libres pour chaque sous-mémoire tampon partagée et une seule liste chaînée d'emplacements occupés (par sortie) pour l'ensemble des sous-mémoires tampons partagées.

Le mode de réalisation représenté sur la figure 6 permet de contrôler l'exécution simultanée de la gestion d'une opération de lecture et d'une opération d'écriture, sans pour autant typiquement diviser par deux le temps d'accès alloué aux mémoires communes de chaînage.

On utilise donc un nombre p (p étant le nombre de sous-mémoires tampons partagées) de mémoires communes de chaînage d'emplacements libres et d'emplacements occupés 80₁ à 80ₚ. Chacune de ces mémoires a une capacité de Kₛ mots de B₃ bits chacun, avec B₃ = log₂(p x Kₛ). On rappelle que chaque sous-mémoire tampon a une capacité de Kₛ mots de c bits chacun.

Par ailleurs, on prévoit p couples de pointeurs 82_{K}, 84_{K} de début et de fin de liste chaînée pour gérer les p listes chaînées d'emplacements libres, et un seul couple 86, 88 (par sortie), de pointeurs de début et de fin de liste chaînée pour gérer chaque liste chaînée d'emplacements occupés (par sortie) pour l'ensemble des sous-mémoires tampons.

Par rapport au mode de réalisation décrit en relation avec les figures 2 à 5, on peut noter que la capacité de mémoire utilisée est plus faible que la somme des capacités des circuits séparés de gestion d'emplacements libres et de gestion d'emplacements occupés. En effet, on utilise la même capacité que dans le cas des figures 4 et 5 (gestion d'emplacements occupés). En fait le nombre total d'emplacements de mémoire qui est nécessaire, dans ce cas, est au plus égal au nombre d'emplacements de mémoire dans l'ensemble des sous-mémoires tampons partagées, car, à tout instant, la somme des emplacements libres et des emplacements occupés est égale à la capacité totale. Autrement dit on s'appuie sur le fait qu'à chaque instant un emplacement de mémoire est soit libre, soit occupé, mais ne peut être à la fois libre et occupé.

Les pointeurs 86 et 88 (par sortie) relatifs aux emplacements occupés sont reliés aux entrées d'un multiplexeur 90 relié lui même à un démultiplexeur 92 à p sorties. Chaque sortie de ce démultiplexeur est connectée à une entrée respective d'un multiplexeur 94₁ ... 94ₚ à deux entrées dont l'autre entrée est reliée à la sortie d'un multiplexeur 96_{K} recevant les pointeurs 82_{K} et 84_{K} du début et de fin de liste chaînée pour les emplacements libres. La sortie du multiplexeur 94_{K} est associée à une entrée correspondante de la mémoire de liste de chaînage correspondante 80_{K}.

En ce qui concerne le temps d'accès à la mémoire commune de chaînage pour la gestion des deux listes chaînées, on observe que, dans le cas d'un élément de commutation classique à mémoire tampon partagée unique comportant aussi une telle mémoire commune de chaînage, le temps d'accès alloué à cette mémoire commune est égal au temps d'accès à la mémoire tampon partagée unique. Ainsi, dans un élément à mémoire tampon partagée unique classique, le temps d'accès à une mémoire de chaînage commune pour la lecture (ou l'écriture) est égal au temps d'accès à la mémoire tampon partagée pour la lecture (ou l'écriture), c'est-à-dire typiquement à la moitié d'un intervalle temporel élémentaire.

Par contre, avec la solution représentée sur la figure 6, les opérations de lecture et d'écriture s'effectuant simultanément dans deux sous-mémoires tampons partagées 30 distinctes, les opérations de gestions correspondantes de listes chaînées d'emplacements libres et de listes chaînées d'emplacements occupés peuvent s'effectuer simultanément dans deux mémoires communes de chaînage distinctes, ces deux mémoires distinctes correspondant respectivement aux deux sous-mémoires tampons partagées distinctes dans lesquelles sont effectuées l'opération de lecture et l'opération d'écriture. Ainsi le temps d'accès alloué aux mémoires de chaînage est, par rapport à un élément de commutation à mémoire tampon partagée unique connu, augmenté de la même manière qu'est augmenté le temps d'accès alloué à la mémoire tampon pour chaque opération de lecture ou d'écriture.

Bien qu'en relation avec les figures 2 à 6 on ait décrit des circuits de gestion pour des emplacements libres et des emplacements occupés basés sur la technique des listes chaînées dans des mémoires de chaînage, il va de soi que l'invention n'est pas limitée à cette réalisation. On peut aussi utiliser, pour cette gestion, d'autres techniques telles que des mémoires à file d'attente du type premier-entré-premier-sorti. Dans ce cas, il faudra aussi, pour l'écriture, une liste d'emplacements libres par sous-mémoire tampon et, pour la lecture, une liste unique d'emplacements occupés (par sortie).

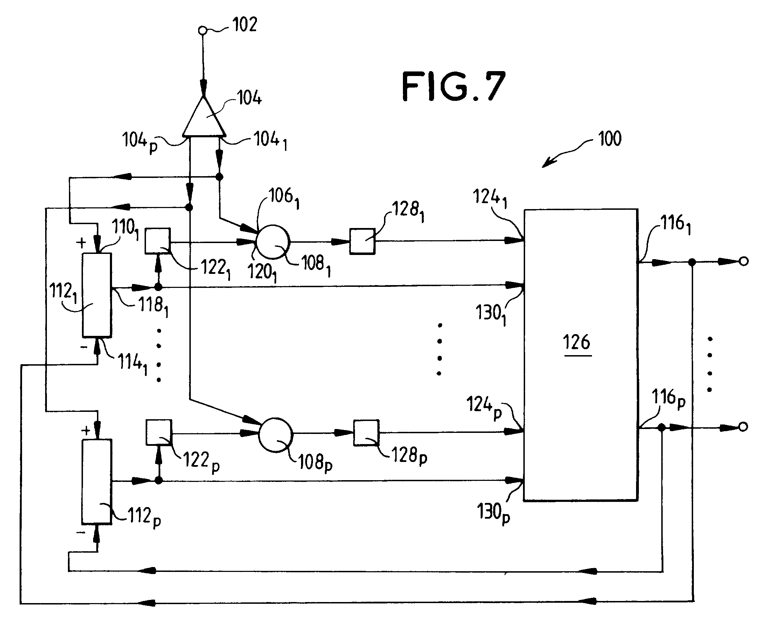

On va maintenant décrire, en relation avec la figure 7, un mode de réalisation de circuit de sélection de la sous-mémoire tampon partagée à utiliser pour l'écriture à un instant donné.

Ce circuit 100 est subordonné à un organe de commande des emplacements occupés (non représenté sur la figure 7) qui rassemble toutes les fondions nécessaires pour commander le transfert des blocs de données à travers l'élément de commutation.

Cet organe fournit, sur une entrée 102, un code indiquant la sous-mémoire tampon partagée sélectionnée pour la lecture. Cette sous-mémoire tampon partagée utilisée pour la lecture ne peut donc pas être sélectionnée pour l'écriture.

L'entrée 102 est appliquée à l'entrée d'un démultiplexeur 104 à p sorties, p étant le nombre de sous-mémoires tampons partagée. Chaque sortie 104₁ ... 104ₚ du démultiplexeur 104 est reliée à la première entrée 106_{K} d'une porte OU 108_{K}, ainsi qu'à l'entrée de comptage 110_{K} d'un compteur-décompteur 112_{K} fournissant, sur sa sortie 118_{K}, un code représentant le nombre d'emplacements libres dans la sous-mémoire tampon partagée correspondante de rang K.

Chaque compteur-décompteur 112_{K} présente aussi une entrée de décomptage 114_{K} qui est reliée à la sortie 116_{K} du circuit 100 sur laquelle apparaît un signal de commande de sélection de sous-mémoire tampon partagée pour écriture.

On comprend qu'ainsi chaque compteur 112_{K} est incrémenté d'une unité à chaque lecture dans la sous-mémoire tampon partagée correspondante et est décrémenté d'une unité à chaque écriture dans cette sous-mémoire tampon correspondante.

La sortie 118_{K} du compteur 112_{K} est reliée à la seconde entrée 120_{K} de la porte OU 108_{K} par l'intermédiaire d'un élément 122_{K} de test de valeur zéro. La sortie de la porte OU 108_{K} est reliée, par l'intermédiaire d'un inverseur 128_{K}, à l'entrée 124_{K} d'un circuit 126 de sélection de sous-mémoire tampon partagée la moins chargée.

La sortie 118_{K} du compteur 112_{K} est par ailleurs reliée à une autre entrée 130_{K} du circuit 126 de sélection de sous-mémoire tampon partagée la moins chargée.

Le signal appliqué sur l'entrée 124_{K} est un signal à 1 bit indiquant si la sous-mémoire tampon partagée de rang K est "candidate" pour l'écriture. En effet, on comprend que cette sous-mémoire tampon partagée ne pourra pas être utilisée pour l'écriture soit parce qu'elle est déjà sélectionnée pour la lecture, comme indiqué (le cas échéant) par le signal sur la sortie 104_{K} du démultiplexeur 104, soit parce qu'elle ne comporte pas d'emplacement libre comme indiqué par le dispositif 122_{K} qui fournit un signal indiquant si le nombre d'emplacements libres est nul ou non.

Le circuit 126 reçoit ainsi, pour chaque sous-mémoire tampon partagée, un signal indiquant si cette sous-mémoire tampon est candidate pour l'écriture (sur une entrée 124_{K}) et un signal représentant le nombre d'emplacements libres (sur l'entrée 130_{K}).

Ce circuit 126 sélectionne celle des sous-mémoires tampons partagée ayant le plus grand nombre d'emplacements libres et qui, bien entendu, est en même temps candidate pour l'écriture. Si plusieurs sous-mémoires tampons partagées ont le même plus grand nombre d'espaces libres, l'une d'elles est choisie arbitrairement, par exemple au hasard ou bien selon un ordre prédéterminé.

Si aucune lecture n'est commandée, le choix de la sous-mémoire tampon partagée pour l'écriture est plus large puisque l'on peut choisir n'importe quelle sous-mémoire tampon présentant un emplacement libre.

Dans ce qui précède on a décrit un élément de commutation 10 présentant un nombre d'entrées égal au nombre de sorties. En variante, le nombre d'entrées et le nombre de sorties peuvent être différents. Dans ce cas, le cycle T comprend deux types d'intervalles : d'une part, des intervalles temporels avec lecture et écriture simultanées possibles (comme décrit ci-dessus), et, d'autre part, des intervalles temporels avec lecture ou écriture seulement possible.

Si le nombre de sorties n₂ est supérieur au nombre des entrées n₁, le cycle T comprendra n₁ intervalles temporels avec lecture et écriture simultanées possibles, et n₂ - n₁ intervalles temporels avec lecture seulement possible.

Si le nombre des entrées n₁ est supérieur au nombre des sorties n₂, le cycle T comprendra n₂ intervalles temporels avec lecture et écriture simultanées possibles et n₁ - n₂ intervalles temporels avec écriture seulement possible.

Il est à noter que l'élément de commutation selon l'invention présente, par rapport à un élément de commutation connu à mémoire tampon partagée unique, un risque de blocage supplémentaire qui peut survenir chaque fois que la sous-mémoire tampon partagée sélectionnée pour la lecture dispose d'emplacements libres alors que les autres sous-mémoires tampons partagées accessibles ne disposent pas d'emplacement libre. Un tel risque de blocage est dit "supplémentaire" parce qu'il n'existe pas dans le cas classique avec mémoire tampon partagée unique (dans laquelle il est toujours possible d'écrire dans le dernier emplacement libre, quel qu'il soit).

Cette probabilité de blocage supplémentaire diminue lorsque le nombre p de sous-mémoires tampons partagées augmente. Cependant, on préfère, en pratique, limiter ce nombre p à une valeur relativement faible pour ne pas accroître la complexité.

Pour réduire ce risque de blocage, il est avantageux que chaque écriture d'un nouveau bloc de données soit effectuée dans la sous-mémoire tampon partagée la moins chargée (c'est-à-dire ayant le plus grand nombre d'emplacements libres). Toutefois, en toute rigueur, un tel perfectionnement n'élimine pas complètement le risque de blocage supplémentaire. Pour l'éliminer complètement, il faut choisir une capacité suffisante pour les sous-mémoires tampons partagées, à savoir une capacité de S'emplacements par sous-mémoire tampon partagée telle que S' soit au moins égal à S/(p - 1), où S est la capacité de référence d'un élément de commutation à mémoire tampon partagée unique classique.

Autrement dit, la capacité S' de chaque sous-mémoire tampon partagée est telle que (p -1) sous-mémoires tampons partagées peuvent recevoir le débit maximum d'information d'écriture en assurant la même probabilité de congestion qu'une mémoire tampon partagée unique de capacité S.

Dans le cas de l'élément selon l'invention, pour éliminer en toute rigueur ce risque de blocage supplémentaire, il faudra donc, par rapport à un élément à mémoire tampon partagée unique, prévoir une capacité supplémentaire S' correspondant à une sous-mémoire tampon partagée.

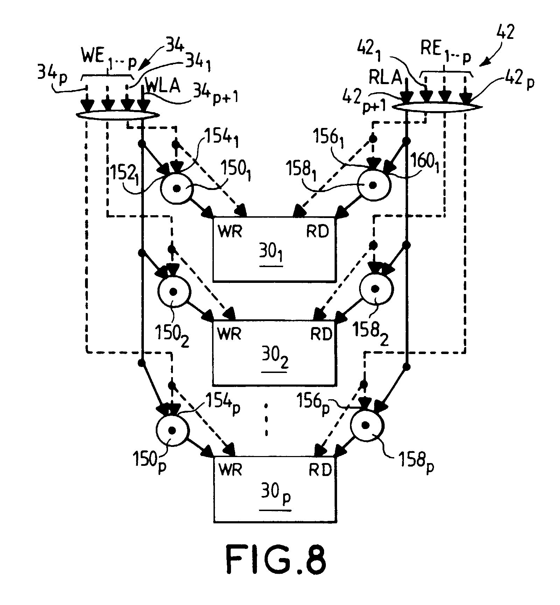

Sur la figure 8 on a représenté la liaison des circuits de sélection, respectivement 34 et 42, aux sous-mémoires tampons partagées 30₁ à 30ₚ.

On voit ainsi que, pour l'écriture, le circuit 34 présente, d'une part, p sorties élémentaires respectivement 34₁ à 34ₚ, et, d'autre part, une sortie supplémentaire 34ₚ₊₁ fournissant l'adresse de l'emplacement d'écriture dans la sous-mémoire tampon partagée sélectionnée.

A chaque sous-mémoire tampon partagée est ainsi affectée une porte ET 150₁, 150₂ ... 150ₚ qui reçoit sur une première entrée 152ₙ l'adresse de l'emplacement à écrire et, sur une seconde entrée 154ₙ, l'ordre d'écriture provenant de l'une des sorties 34ᵢ.

De même, le circuit 42 comporte, d'une part, p sorties élémentaires 42₁ à 42ₚ reliées à des entrées 156₁ à 156ₚ de portes ET 158₁ à 158ₚ et, d'autre part, une sortie 42ₚ₊₁ reliée aux secondes entrées 160 des portes ET 158. Cette sortie 42ₚ₊₁ fournit l'adresse de l'emplacement à lire dans la sous-mémoire tampon partagée sélectionnée tandis que les sorties 42₁ à 42ₚ déterminent celle des sous-mémoires tampons partagées qui est sélectionnée pour la lecture.

Comme expliqué ci-dessus, les opérations d'écriture commandées par le circuit 34, et de lecture, commandées par le circuit 42, peuvent être effectuées simultanément.

Le dispositif de gestion selon l'invention est applicable non seulement à la mémoire tampon partagée d'un commutateur élémentaire, mais aussi aux modules terminaux d'entrée et aux modules terminaux de sortie, munis de mémoires tampons partagées, que l'on utilise à l'entrée et à la sortie d'un réseau de commutation constitué d'un ou plusieurs d'étages de commutateurs élémentaires.

Dans un module terminal d'entrée (ou de sortie), une mémoire tampon partagée est classiquement utilisée pour stocker temporairement les blocs de données, par exemple des cellules, qui sont reçus puis transmis sur une seule ou bien plusieurs [n] liaisons entrantes (ou sortantes) ; ce choix de réalisation dépend du débit maximal de trafic qu'il est possible de traiter dans une mémoire tampon partagée, sachant que le débit global d'informations multiplexées dans le temps et transférées dans cette mémoire est le produit du débit d'informations de chaque liaison par le nombre [n] de liaisons multiplexées.

Etant donné que le débit maximal de trafic que l'on peut traiter à travers une mémoire tampon partagée est limité par le plus petit intervalle temporel élémentaire requis pour transférer chaque cellule, lequel comprend une opération d'écriture et une opération de lecture dans cette mémoire pour chaque cycle temporel correspondant à une cellule, l'invention permet donc dans les modules terminaux, comme dans les éléments de commutation, d'augmenter sensiblement le temps alloué pour effectuer chaque opération d'écriture ou de lecture dans la mémoire tampon, si l'on considère un même débit d'informations global donné dans un module terminal. Inversement, pour un temps d'accès de mémoire donné, l'invention permet d'augmenter le débit d'informations global qu'une mémoire tampon partagée peut traiter dans un module terminal, c'est-à-dire permet des liaisons à plus grand débit ou bien pour un plus grand nombre de liaisons.

## Revendications

1. Dispositif de gestion d'une mémoire tampon partagée (18) comportant plusieurs sous-mémoires tampons partagées (30_{1 ,}..., 30ₚ), un circuit de sélection en écriture (34) pour y écrire les blocs de données provenant des entrées, un circuit de sélection en lecture (42) pour y lire ensuite ces blocs de données et les diriger vers au moins une sortie ; ces deux circuit de sélection comportant des moyens d'arbitrage pour effectuer l'écriture et la lecture des blocs de données :
- selon des cycles périodiques (T), chaque cycle comportant des intervalles temporels élémentaires (t1,...,t32) au cours de chacun desquels un bloc de données reçu sur une entrée peut être écrit dans une de ces sous-mémoires tampons partagées, et au cours desquels un bloc de données préalablement écrit peut être lu et envoyé vers une sortie déterminée ;
- en réalisant simultanément, au moins pendant certains desdits intervalles temporels élémentaires, l'écriture d'un bloc de données, provenant d'une entrée, et la lecture d'un bloc de données à envoyer vers une sortie, dans des sous-mémoires tampons partagées distinctes ; la sélection d'une sous-mémoire tampon pour la lecture étant prioritaire par rapport à la sélection de cette même sous-mémoire tampon pour l'écriture ;
**caractérisé** en ce que ces moyens d'arbitrage comportent des moyens pour arbitrer un seul accès en écriture vis à vis d'un seul accès en lecture, au cours de chaque intervalle temporel élémentaire.

2. Dispositif de gestion selon la revendication 1 , caractérisé en ce que les deux circuits de sélection (34, 42) sont tels que, pour chaque intervalle temporel élémentaire, le choix de la sous-mémoire tampon, pour écrire un bloc de données, dépend de l'état et/ou du taux de remplissage de chacune des sous-mémoires tampons partagées (30₁ ... 30ₚ).

3. Dispositif de gestion selon la revendication 2, caractérisé en ce que les deux circuits de sélection (34, 42) sont tels que l'écriture est effectuée dans celle des sous-mémoires tampons partagées qui est la moins chargée parmi celles qui ne sont pas sélectionnées pour lire un bloc de données.

4. Dispositif de gestion selon la revendication 2 ou 3, caractérisé en ce que les deux circuits de sélection (34,42) comportent, pour chaque sous-mémoire tampon partagée (30₁ ... 30ₚ), un compteur (112₁ ... 112ₚ) du nombre d'emplacements libres en mémoire, ce compteur étant incrémenté lorsque la sous-mémoire tampon partagée correspondante est sélectionnée en lecture, et étant décrémenté à chaque fois que la sous-mémoire tampon partagée correspondante est sélectionnée en écriture.

5. Dispositif de gestion selon les revendications 3 et 4, caractérisé en ce que les deux circuits de sélection (34,42) comportent un circuit (126) de sélection de la sous-mémoire tampon partagée la moins chargée, qui comprend des couples d'entrées (124_{K}, 130_{K}) en nombre égal au nombre de sous-mémoires tampons partagées, une première entrée (124_{K}) de chaque couple recevant un signal indiquant si la sous-mémoire tampon partagée correspondante est sélectionnable ou non pour l'écriture, et la seconde entrée (130_{K}) de chaque couple recevant un signal de sortie (118_{K}) du compteur (112_{K}) d'emplacements libres associé.

6. Dispositif de gestion selon l'une quelconque des revendications précédentes, caractérisé en ce que, pour l'écriture dans les sous-mémoires tampons partagées, il comprend un moyen de gestion des emplacements libres dans les sous-mémoires tampons partagées, qui gère une liste d'emplacements libres pour chaque sous-mémoire tampon partagée.

7. Dispositif de gestion selon la revendication 6, caractérisé en ce que le moyen de gestion d'emplacements libres comporte, pour chaque sous-mémoire tampon partagée, une mémoire dans laquelle est stockée une file d'attente de type premier-entré-premier-sorti.

8. Dispositif de gestion selon la revendication 6, caractérisé en ce que le moyen de gestion d'emplacements libres comporte, pour chaque sous-mémoire tampon partagée, une mémoire de chaînage (50₁ ... 50ₚ ; 58) associée à un pointeur (52₁ ... 52ₚ) de début de liste et à un pointeur (54₁ ... 54ₚ) de fin de liste d'emplacements libres.

9. Dispositif de gestion selon la revendication 8, caractérisé en ce que le moyen de gestion d'emplacements libres comporte une mémoire de chaînage (50₁ ... 50ₚ) par sous-mémoire tampon partagée (30₁ ... 30ₚ), le nombre de lignes (Kₛ) dans une mémoire de chaînage étant au moins égal au nombre (Kₛ) d'emplacements disponibles dans la sous-mémoire tampon partagée correspondante.

10. Dispositif de gestion selon la revendication 8, caractérisé en ce que le moyen de gestion d'emplacements libres comporte une mémoire de chaînage (58) commune à l'ensemble des listes, le nombre de lignes dans cette mémoire étant au moins égal au nombre des emplacements disponibles dans l'ensemble des sous-mémoires tampons partagées.

11. Dispositif de gestion selon l'une quelconque des revendications précédentes, caractérisé en ce qu'il comporte un moyen de gestion d'écriture et de lecture (126) tel que les blocs de données à transmettre successivement vers une sortie déterminée sont susceptibles d'être inscrits dans des sous-mémoires tampons partagées différentes et donc susceptibles d'être lus dans des sous-mémoires tampons partagées différentes.

12. Dispositif de gestion selon la revendication 11, caractérisé en ce qu'il comporte un moyen de gestion de la lecture (126) pour transmettre vers une sortie déterminée les données dans un ordre prédéterminé, ce moyen de gestion de la lecture comportant un moyen de gestion des emplacements occupés, utilisant une liste chaînée unique d'emplacements occupés par sortie pour l'ensemble des sous-mémoires tampons partagées.

13. Dispositif de gestion selon la revendication 12, caractérisé en ce que le moyen de gestion d'emplacements occupés, pour la lecture, comporte une mémoire à file d'attente du type premier-entré-premier-sorti.

14. Dispositif de gestion selon la revendication 13, caractérisé en ce que le moyen de gestion d'emplacements occupés, pour la lecture, comporte une mémoire de chaînage (68₁ ... 68ₚ ; 74) comprenant une liste chaînée, la mémoire étant associée à un pointeur (64) de début de liste et à un pointeur (66) de fin de liste.

15. Dispositif de gestion selon la revendication 14, caractérisé en ce que le moyen de gestion d'emplacements occupés, pour la lecture, comporte un nombre de mémoires de chaînage (68₁ ... 68ₚ) égal au nombre de sous-mémoires tampons partagées, le nombre de lignes dans chaque mémoire de chaînage étant au moins égal au nombre d'emplacements existants dans la sous-mémoire tampon partagée correspondante.

16. Dispositif de gestion selon la revendication 14, caractérisé en ce que le moyen de gestion d'emplacements occupés, pour la lecture, comporte une mémoire de chaînage (74) commune à l'ensemble des listes d'emplacements occupés, le nombre de lignes dans la mémoire étant au moins égal au nombre total d'emplacements existants dans toutes les sous-mémoires tampons partagées.

17. Dispositif de gestion selon l'une quelconque des revendications précédentes, caractérisé en ce qu'il comporte un moyen de gestion regroupée des emplacements libres pour l'écriture et des emplacements occupés pour la lecture, ce moyen de gestion regroupée comportant des mémoires de chaînage (80₁ ... 80ₚ) en nombre égal au nombre de sous-mémoires tampons partagées, chaque mémoire de chaînage étant utilisée à la fois pour la gestion des emplacements libres et la gestion des emplacements occupés, le nombre de lignes dans chacune de ces mémoires de chaînage étant égal au nombre d'emplacements disponibles dans la sous-mémoire tampon partagée correspondante.

18. Dispositif de gestion regroupée selon la revendication 17, caractérisé en ce qu'il comporte des moyens pour effectuer simultanément les opérations de mises à jour des listes d'emplacements libres et des listes d'emplacements occupés, dans des mémoires de chaînage différentes.

19. Dispositif de gestion selon l'une quelconque des revendications précédentes, caractérisé en ce que les p sous-mémoires tampons partagées ayant toutes la même capacité, cette capacité est choisie de façon telle que p - 1 sous-mémoires tampons partagées puissent recevoir le débit maximum d'information d'écriture.

20. Élément de commutation caractérisé en ce qu'il comporte un dispositif de gestion selon l'une quelconque des revendications précédentes.

21. Elément de commutation selon la revendication 20, comportant un même nombre d'entrées et de sorties ; caractérisé en ce que pendant chaque intervalle temporel élémentaire ce dispositif de gestion est susceptible d'effectuer simultanément une écriture de bloc de données et une lecture de bloc de données dans la mémoire tampon.

22. Elément de commutation selon la revendication 20, comportant un nombre d'entrées et un nombre de sorties différents, et caractérisé en ce que chaque cycle comprend des premiers intervalles temporels élémentaires au cours desquels le dispositif de gestion peut effectuer une écriture et une lecture simultanées, et des seconds intervalles temporels élémentaires au cours desquels il peut effectuer seulement des lectures ou seulement des lectures.

23. Module terminal d'entrée d'un réseau de commutation, caractérisé en ce qu'il comporte un dispositif de gestion selon l'une quelconque des revendications 1 à 19.

24. Module terminal de sortie d'un réseau de commutation, caractérisé en ce qu'il comporte un dispositif de gestion selon l'une quelconque des revendications 1 à 19.
